(19) Europäisches Patentamt / European Patent Office / Office européen des brevets

(11) **EP 3 799 627 B1**

(12) **FASCICULE DE BREVET EUROPEEN**

(45) Date de publication et mention
de la délivrance du brevet:
**03.08.2022 Bulletin 2022/31**

(21) Numéro de dépôt: **19713725.0**

(22) Date de dépôt: **19.03.2019**

(51) Classification Internationale des Brevets (IPC):
*G04B 31/06* *(2006.01)*     *F16C 35/02* *(2006.01)*
*F16B 39/16* *(2006.01)*

(52) Classification Coopérative des Brevets (CPC):
**G04B 31/06; F16C 35/02;** F16B 39/16;
F16C 2226/60; F16C 2370/00

(86) Numéro de dépôt international:
**PCT/EP2019/056773**

(87) Numéro de publication internationale:
**WO 2019/179980 (26.09.2019 Gazette 2019/39)**

(54) **DISPOSITIF DE FIXATION ET DE REGLAGE D'UN PALIER, NOTAMMENT POUR PIECES D'HORLOGERIE**

VORRICHTUNG ZUR SICHERUNG UND ANPASSUNG EINES LAGERS, INSBESONDERE FÜR UHREN

DEVICE FOR SECURING AND ADJUSTING A BEARING, ESPECIALLY FOR TIMEPIECES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.03.2018 CH 3752018**

(43) Date de publication de la demande:
**07.04.2021 Bulletin 2021/14**

(73) Titulaire: **Freymond, Eric**
**London W1K 2RS (GB)**

(72) Inventeur: **RENAUD, Dominique**
**1110 Morges (CH)**

(74) Mandataire: **Bovard SA Neuchâtel**
**Rue des Noyers 11**
**2000 Neuchâtel (CH)**

(56) Documents cités:
**CH-A- 99 986**     **CH-A- 342 523**

## Description

### Domaine technique

La présente invention se rapporte au domaine de l'horlogerie. Elle concerne, plus particulièrement, un dispositif de fixation et de réglage d'un palier dans un pont ou une platine d'une pièce d'horlogerie.

L'invention concerne également un procédé de fixation et de réglage d'un palier dans un pont ou une platine d'une pièce d'horlogerie à l'aide d'un tel ensemble.

### Etat de la technique

Dans le domaine de l'horlogerie, on connait depuis plusieurs siècles maintenant l'utilisation de pierres, essentiellement constituées de rubis naturels ou synthétiques, pour former des paliers de support des extrémités ou tigerons des axes de rotations de mobiles rotatifs tels que le balancier ou encore le mobile d'échappement. Ces pierres, également appelées coussinets dans certains cas, notamment dans des amortisseurs, adoptent en général une forme générale de disque, percé ou non, à deux faces opposées, lesquelles peuvent être plates ou bombées. On connait également l'utilisation de paliers simples, par exemples métalliques, en lieu et place de pierres.

Ces pierres ou paliers sont usuellement fixés dans des orifices aménagés à cette effet sur la platine ou les ponts d'un mouvement de pièce d'horlogerie à l'aide d'une bague métallique, appelée « chaton », qui sertit la pierre dans son orifice. Ce chaton est en pratique chassé dans l'orifice de logement de la pierre. En variante, les pierres peuvent être chassées directement dans un orifice formé dans le pont ou la platine.

Dans certaines configurations, notamment pour réduire les frottements de tigerons d'axes, deux pierres sont associées pour former un ensemble de support formé d'une première pierre percée et bombée recevant le tigeron dans son orifice et d'une seconde pierre, dite contre-pivot, dont une face plate produit contre-appui dudit tigeron. Le contre-pivot est alors usuellement fixé dans une plaquette métallique fixée sur un pont ou la platine du mouvement par des vis et la première pierre par un chaton come précédemment exposé.

Un inconvénient ou difficulté majeur dans l'utilisation de pierres réside dans la difficulté du réglage de celles-ci en position dans les orifices prévus à cet effet sur les ponts ou la platine d'un mouvement horloger. Il convient en effet de procéder avec une extrême précision, à la main, au perçage desdits orifices et au chassage subséquent des pierres et de leur chaton afin d'assurer le centrage et l'ajustement en hauteur des mobiles supportés par rapport aux autres mobiles et pièces du mouvement. Ces opérations requièrent ainsi une très grande expérience et dextérité des régleurs qui s'en chargent, ce qui n'exclut cependant pas une erreur, même minime de chassage en profondeur, auquel cas il est alors nécessaire de recommencer l'opération et remplacer soit le chaton, soit la pierre, soit les deux, ce qui s'avère extrêmement coûteux.

Le document CH99986A divulgue un support pour contre-pivot de balancier d'échappement agencé pour être vissé dans la platine et pour être fixé dans sa position au moyen d'une vis.

Il existe donc un besoin à procurer une solution de fixation et de réglage de pierres sur des ponts et platines de pièces d'horlogerie qui permette une mise en place et un réglage simplifiés de pierres, à coûts maitrisés.

### Divulgation de l'invention

L'invention a aussi pour objet, selon un premier aspect, un dispositif de fixation et de réglage d'un palier, notamment d'une pierre, dans un orifice prévu à cet effet dans un pont ou une platine d'une pièce d'horlogerie. Dans le cadre de la présente invention, on comprend par « palier » tout type de pièce qui supportent les arbres de transmission ou rotation de mobiles horlogers dans un mouvement horloger, et notamment des pierres synthétiques ou naturelles usuellement utilisées pour former des coussinets, ou coussinets-pierres par exemple.

Le dispositif de fixation et de réglage d'un palier selon l'invention comporte:

- Une première vis, dite de palier, définissant une ouverture interne de maintien d'une dite palier présentant un diamètre d1, ladite première vis comportant un filetage externe de diamètre externe df1 supérieur à d1 et une longueur L1, mesurée perpendiculairement aux dits diamètres d1, Df1 ;
- Une seconde vis, dite de verrouillage, définissant une ouverture interne diamètre d2 inférieur ou égal à d1, ladite seconde vis comportant un filetage externe de diamètre externe Df2 supérieur aux diamètres d2, d1, Df1 et une longueur L2, mesurée perpendiculairement aux dits diamètres d2, Df2 ; et
- Une douille définissant un logement tubulaire s'étendant suivant un axe longitudinal A-A', ledit logement tubulaire comportant une première section taraudée, adaptée pour y visser la première vis, et une seconde section taraudée, consécutive à la première section suivant l'axe longitudinal A-A', adaptée pour y visser la seconde vis, une zone médiane de guidage linéaire desdites vis étant procurée entre les deux sections taraudées;
- Les filetages externes de la première et seconde vis et les sections correspondantes de la douille présentant des pas respectifs de vissage de sens opposés.

Le dispositif de la présente invention procure une solution de fixation de paliers permettant de s'affranchir d'un savoir-faire ou dextérité particulier d'un opérateur pour régler le partagement et les ébats de mobiles par rapport aux paliers et leur fixation selon les modalités classiques de l'art antérieur.

En effet, il permet d'encadrer l'opération de fixation et de réglage en rendant l'opération de chassage du palier indépendante de la qualité de son réglage en position par la procuration de la vis de palier, qui peut être ajustée en position longitudinale de manière précise dans l'orifice du pont ou platine, qui est lui équipé de la douille et permet le guidage pas à pas lors du vissage de la vis de palier du réglage. On ne laisse ainsi aucune place au hasard dans le réglage en position, qui peut être aussi fin que souhaité en choisissant la géométrie du pas de vis de palier.

La vis de verrouillage procure en outre une sécurité de réglage en ce qu'elle permet de maintenir la vis de palier une fois réglée en position, et les pas de vis respectifs des deux vis de palier et verrouillage étant inversés toute forme d'accouplement par frottement entre les deux vis est empêché ce qui garantit les positions relatives desdites vis dans la douille.

La vis de verrouillage peut en outre être associée à un contre pivot inséré dans un alésage prévu à cet effet dans ladite vis de verrouillage, afin de procurer une fonction de réglage additionnelle au dispositif lorsqu'un palier percé est chassée dans l'ouverture idoine de la vis de palier pour recevoir un tigeron d'axe de mobile d'horlogerie.

Un autre avantage de l'invention est de permettre une réduction du nombre de ponts pour simplifier les opérations de montage/démontage d'un mouvement et d'alignement et réglage des mobiles.

L'invention concerne par ailleurs selon un second aspect un procédé de fixation et de réglage d'un palier dans un orifice prévu à cet effet dans un pont ou une platine de pièce d'horlogerie à l'aide d'un dispositif selon l'une des revendications précédentes, comportant les étapes suivantes :

-   Chassage ou usinage de la douille dans un orifice formé dans ledit pont ou platine,
-   Chassage d'un dit palier à fleur dans l'ouverture interne de maintien de la vis de palier,
-   Mise en place de la vis de palier dans la douille par vissage dans un sens dans une première section S1 de la douille,
-   Mise en place de la vis de verrouillage par vissage dans une seconde section S2 dans un sens opposé au sens de vissage de la vis de palier et alignement

à la vis de palier selon l'axe A-A' de la douille jusqu'à butée de la vis de verrouillage contre la vis de palier.

Ce procédé se révèle ainsi particulièrement simple, sans besoin d'un quelconque tour de main particulier des opérateurs le mettant en œuvre. On limite ainsi les potentielles bévues de chassage et de réglage et les rebus de pièces.

## Brève description des dessins

D'autres détails de l'invention apparaîtront plus clairement à la lecture de la description qui suit, faite en référence aux dessins annexés dans lesquels :

-   la figure 1 représente une vue en coupe longitudinale d'un dispositif de fixation de palier selon l'invention dans un premier mode de réalisation,

-   la figure 2 représente une vue de dessus du dispositif de la figure 1,

-   la figure 3 représente une vue en coupe longitudinale d'un dispositif de fixation de palier selon l'invention dans un second mode de réalisation.

Mode de réalisation de l'invention

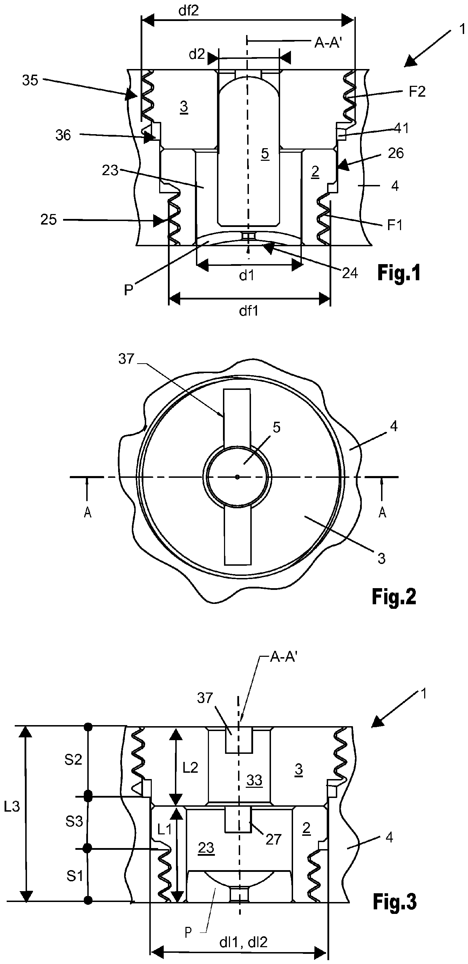

On a représenté sur les figures 1 et 3 deux exemples de réalisation d'un dispositif 1 de fixation et de réglage d'un palier P dans un orifice prévu à cet effet dans un pont ou une platine d'une pièce d'horlogerie. Ces deux exemples diffèrent essentiellement par la présence (fig. 1) ou non (fig. 3) d'un contre-pivot 5 de réglage de partagement par rapport au palier P fixée à l'aide du dispositif 1 de l'invention en fonction de la nature dudit palier P. Plus particulièrement, dans le cas d'une pierre glace P représenté à la fig. 3 un tel contre-pivot 5 n'est pas nécessaire, comme d'ailleurs dans les montages de pierres glaces classiques connus de l'art antérieur.

Le dispositif 1 de fixation et de réglage de palier de la présente invention est conçu et structuré afin de limiter au maximum la dépendance des opérations de fixation et réglage de paliers P, notamment de pierres, dans les ponts/platine de mouvements horlogers aux facteurs humains d'expérience et de dextérité des opérateurs menant ces opérations. Il a en outre pour vocation de permettre un réglage simplifié et rattrapable, c'est-à-dire corrigeable dans le temps, par exemple lors de services de révision de mouvements.

A cet effet, le dispositif 1 comporte essentiellement une première vis 2, dite de palier, et une deuxième vis 3, dite de verrouillage, configurées pour être ajustées en position et coopérer aux fins de fixation et de réglage d'un dit palier P dans une douille 4, formant écrou, adaptée pour être chassée ou formée dans la masse dans un orifice prévu à cet effet dans un pont ou une platine.

La vis de palier 2 est formée d'une bague annulaire percée longitudinalement d'un alésage 23 central traversant de diamètre d1 définissant à une extrémité une ouverture 24 interne de sertissage d'un palier P. La vis de palier 2 comporte en outre sur sa périphérie deux sections 25, 26 consécutives, en l'espèce une première section filetée 25 et une section de tête 26 non filetée, chaque dite section présentant un diamètre externe df1, dl1 différent et tel que d1<df1<dl1.

La section filetée 25 comporte un filetage externe F1 de diamètre externe df1 s'étendant sur au moins la moitié de la longueur L1 de la vis de palier 2, mesurée perpendiculairement aux dits diamètres d1, df1, dl1. Le filetage F1 peut être de forme variable, notamment de type métrique ISO, trapézoïdal ou en dent de scie, et définit un premier sens de vissage, par exemple antihoraire (à gauche).

La section de tête 26 est dépourvue de filetage et forme un anneau cylindrique de diamètre dl1 de surface externe plane, raccordé à la section filetée 25. Cette section de tête 26 et sa surface périphérique plane ont une fonction de guidage et de centrage de la vis de palier 2 dans la douille 4 comme il sera décrit par la suite. La section de tête 26 présente enfin une surface d'extrémité plane, dans laquelle est avantageusement formée de préférence une ou plusieurs encoches 27 ou rainures (fig. 3) adapté(es) pour y insérer un outil de vissage tel un tournevis.

La vis de verrouillage 3 est formée d'une bague annulaire percée longitudinalement d'un alésage 33 central traversant de diamètre d2 et comporte en outre sur sa périphérie deux sections 35, 36 consécutives, en l'espèce une première section de base non filetée 36 et une section de tête filetée 35, chaque dite section présentant un diamètre externe respectif dl2, df2 différent et tel que d2<dl2<df2. Ainsi, la vis de verrouillage 3 présente une structure analogue à celle de la vis de palier 2 mais inversée.

L'alésage central 33 est destiné à recevoir, comme représenté sur le figure 1, une goupille contre-pivot 5 qui peut être chassée selon l'axe A-A' longitudinal de la douille 4 dans ledit alésage 33 après vissage de celle-ci dans la douille 4.

La section filetée 35 comporte un filetage externe F2 de diamètre externe df2 s'étendant sur au moins la moitié, de préférence sur sensiblement 2/3 de la longueur L2 de la vis de verrouillage 3, mesurée perpendiculairement aux dits diamètres d2, df2, dl2. La longueur L2 peut être inférieure ou égale à la longueur L1 de la vis de palier de préférence.

Le filetage F2 peut lui aussi être de forme variable, notamment de type métrique ISO, trapézoïdal ou en dent de scie, et il définit un deuxième sens de vissage opposé à celui de la vis de palier 2, par exemple horaire (à droite). La section filetée 35 présente une surface supérieure (sur les figures) plane dans laquelle est avantageusement formée de préférence une ou plusieurs encoches 37 ou rainures adapté(es) pour y insérer un outil de vissage tel un tournevis.

La section de base 36 est dépourvue de filetage et forme un anneau cylindrique de diamètre dl2 et de surface externe plane, raccordé à la section filetée 35 par un épaulement 36. Cette section de base 36 et sa surface périphérique plane ont une fonction de guidage et de centrage de la vis de verrouillage 3 dans la douille 4 par rapport à la vis de palier 2 comme il sera décrit par la suite. A cette fin, le diamètre dl2 de la section de base 36 est égale au diamètre dl1 de la section de tête 26 de la vis de palier 2 et présente comme cette dernière une surface d'extrémité plane destinée à venir en butée contre la surface plane d'extrémité de la section de tête 26 de la vis de palier 2.

Les différents diamètres utiles des deux vis 2, 3 du dispositif 1 de l'invention sont ainsi préférentiellement tels que :

$$d2<d1<df1<dl1\leq dl2<df2.$$

La douille 4 définit un logement tubulaire 41 s'étendant suivant un axe longitudinal A-A', dans lequel les deux vis 2, 3 peuvent être vissées et ajustées par vissage en position longitudinale dans le logement afin d'assurer le centrage d'un palier et, le cas échéant, son positionnement par rapport à la surface d'un pont ou platine d'un mouvement horloger.

Cette douille 4 peut au choix être formée d'une bague annulaire formant écrou aux vis 2, 3, dont la forme et les dimensions sont adaptées pour son insertion par chassage dans un orifice percé dans un dit pont ou platine, ou bien être usinée directement dans la masse d'un dit pont ou platine, par alésage et taraudage d'un orifice traversant percé selon ledit axe A-A'. La première solution présente l'avantage de procurer un dispositif 1 unitaire, simple à conditionner pour son fabricant et à utiliser par un monteur de mouvement horloger, la douille 4 formant corps dans lequel les vis 2,3 peuvent être pré-vissées, et un simple perçage à dimension étant requis dans les ponts et platines pour y chasser la douille 4. La seconde solution présente quant à elle l'avantage d"éviter une opération de chassage de la douille 4 pour le monteur, ainsi qu'un meilleur rendu visuel sur le mouvement.

Quelle que soit le mode de réalisation de la douille 4, le logement tubulaire 41 défini par celle-ci présente une longueur L3 supérieure ou égale à la somme des longueurs L1, L2 des vis 2, 3. Ledit logement 41 comporte avantageusement trois sections consécutives configurées pour épouser les sections particulières des vis de palier 2 et de verrouillage 3. Le logement tubulaire 41 comporte ainsi une première section taraudée S1, adaptée pour y visser la partie filetée 25 de la vis de palier 2, et une seconde section taraudée S2 adaptée pour y visser la section filetée 35 de la vis de verrouillage 3, ces deux sections S1,S2 étant jointes par une section médiane S3 non taraudée adaptée pour guider linéairement les sections non filetées 26, 36 des vis de palier 2 et de verrouillage 3 de telle sorte que lesdites vis 2, 3 soient alignées coaxialement à l'axe A-A' lors de leur vissage dans la douille 4. Bien entendu, les taraudages des sections S1, S2 de la douille 4 sont complémentaires des filetages F1, F2 des vis 2, 3 afin d'assurer un vissage et dévissage de ces dernières sans jeu dans la douille 4.

Le dispositif 1 de fixation et de réglage d'un palier P selon l'invention ainsi décrit permet de réaliser le montage et le réglage d'un dit palier P dans un orifice prévu à cet effet dans un pont ou une platine de pièce d'horlogerie selon un procédé simple, aisément reproductible de manière maitrisée sans faire œuvre d'un savoir faire particulier pour tout monteur horloger moyen, qui constitue l'homme de l'art dans le cadre de l'invention. Ce procédé de fixation est de réglage comporte ainsi les étapes suivantes.

Une première étape consiste à installer la douille 4 du dispositif 1 dans un dit orifice de pont ou de platine. Pour ce faire, selon le mode de réalisation de la douille 4 préféré par le monteur, on chasse ladite douille 4 dans l'orifice prévu à cet effet ou, en variante, on usine les différentes sections S1, S2,S3 de celle-ci dans ledit orifice.

Dans une seconde étape, on vient ensuite chasser un dit palier P à fleur, c'est-à-dire à affleurement de l'extrémité de la section filetée 25 de la vis de palier 2, dans l'ouverture interne 24 de sertissage de la vis de palier 2 du dispositif 1. Le dit palier P peut être de tout type classique, notamment de type pierre percée et bombée olivée comme sur la figure 1 ou encore une pierre glace comme sur la figure 3. La vis de palier 2 joue ainsi en quelque sorte une fonction d'un chaton connu dans la technique antérieure.

Une fois le palier P inséré dans l'ouverture 24 de la vis de palier 2, on insère celle-ci dans la douille 4 par vissage dans le sens antihoraire (selon la convention définie précédemment en référence aux figures 1 et 3) dans la section S1 de la douille 4. Lors de ce vissage de la vis de palier 2, le passage de la section de tête 26 de la vis dans la section S3 de la douille 4 permet un centrage de la vis 2 et du palier P selon l'axe A-A' de la douille 4.

De préférence, on visse la vis 2 jusqu'à une position souhaitée de réglage de l'ébat et/ou partagement d'un mobile horloger à pivoter sur le palier P. On vient ensuite positionner ledit mobile dans l'orifice prévu à cet effet et on effectue le réglage de l'ébat au niveau de son axe par ajustement de la profondeur de vissage de la vis de palier 2 dans la douille.Une fois ce réglage effectuée, on vient ensuite pour finir mettre en place la vis de verrouillage 3 par vissage dans la section S2 dans un sens opposé au sens de vissage de la vis de palier 2, c'est-à-dire un sens horaire dans le cas décrit ici. Le vissage de la vis de verrouillage 3 dans la douille 4 procure aussi, le cas échéant, un centrage de cette vis 3 et son alignement à la vis de palier 2 selon l'axe A-A' de la douille 4 par effet de l'insertion de la section de base 36 de la vis de verrouillage 3 dans la section S3 de la douille 4 alors que celle-ci pénètre dans la douille 4 jusqu'à venir en butée contre la vis de palier 2. Ce vissage en butée de la vis de verrouillage 3 assure le blocage longitudinal dans la douille de la vis de palier 2 et de la vis de verrouillage 3, qui ne peuvent ainsi remonter ou descendre, même en cas de vibrations, en raison des sens inversés des pas respectifs de deux vis 2, 3.

Le procédé de l'invention permet ainsi de fixer un palier P et d'en régler la position ainsi que le réglage de mobiles horloger pivotés sur un tel palier de manière sensiblement « mécanique », par effet de la structure du dispositif 1 de l'invention induisant un centrage automatique des vis 2,3 dans leur douille 4 ainsi qu'un réglage longitudinal desdites vis pour assurer le parfait réglage d'ébat par simple vissage de la vis de palier 2 puis verrouillage de celle-ci par la vis de verrouillage 3. En outre, il convient de noter que ce dispositif permet également un entretien et une révision aisée, les ouvertures 23, 33 des vis facilitant l'huilage du palier P, ainsi que le cas échéant son démontage, voire son remplacement par simple devissage de la vis de palier 2 de la douille 4.

Le procédé de l'invention tel que décrit ci-avant s'applique notamment sans autre étape pour le montage d'une pierre glace, comme représenté à la figure 3. On peut également prévoir la mise en œuvre d'un contre-pivot 5 afin de limiter la pénétration longitudinale selon l'axe A-A' de la douille 4 d'un tigeron d'axe de mobile horloger destiné à être monté à pivot dans un palier P de type pierre bombée comme à la figure 1. Dans ce cas, le procédé de fixation comporte alors une étape additionnelle de chassage du contre pivot 5 dans l'alésage 33 de la vis de verrouillage 3 coaxialement à l'axe A-A' de la douille de manière à régler la distance de partagement entre l'extrémité inférieure du contre-pivot 5 et une surface dudit palier P chassé dans la vis de palier 2. Dans une telle configuration, le contre-pivot 5 est de préférence choisi tel que sa longueur L4 soit telle que L2< L4 < L3.

L'invention propose ainsi une solution simple et économique de fixation et de réglage d'un palier dans un pont ou une platine de pièce d'horlogerie.

**Revendications**

1. Dispositif (1) de fixation et de réglage d'un palier (P) dans un orifice prévu à cet effet dans un pont ou une platine d'une pièce d'horlogerie, comportant

   - Une première vis (2), dite de palier, définissant une ouverture (24) de maintien d'un dit palier (P) présentant un diamètre d1, ladite première vis (2) comportant un filetage externe (F1) de diamètre externe df1 supérieur à d1 et une longueur L1, mesurée perpendiculairement aux dits diamètres d1, df1 ;
   - Une seconde vis (3), dite de verrouillage, définissant un alésage interne (33) de diamètre d2 inférieur ou égal à d1, ladite seconde vis (3) comportant un filetage externe (F2) de diamètre externe df2 supérieur aux diamètres d2, d1, df1 et une longueur L2, mesurée perpendiculairement aux dits diamètres d2, df2 ; et
   - Une douille (4) définissant un logement tubulaire (41) s'étendant suivant un axe longitudinal (A-A'), ledit logement tubulaire (41) comportant une première section taraudée (S1), adaptée pour y visser la première vis (2), et une seconde section taraudée (S2), adaptée pour y visser la seconde vis (3), lesdites sections taraudées étant jointes par une section médiane (S3) de guidage linéaire desdites vis (2, 3) ;
- Les filetages externes (F1, F2) de la première et seconde vis (2, 3) et les sections correspondantes (S1, S2) de la douille (4) présentant des pas respectifs de vissage de sens opposés.

2. Dispositif selon la revendication 1, **caractérisé en ce que** chaque vis (2, 3) comporte une section cylindrique (26, 36) dépourvue de filetage et de diamètre externe dl1, dl2 tel que df1< dl1≤dl2<df2 et **en ce que** la douille (4) comporte une section médiane (S3) non taraudée de diamètre interne égal aux dits diamètres dl1, dl2, lesdites sections cylindriques des vis et section médiane (S3) de la douille étant telles que lesdites vis sont alignées coaxialement à l'axe A-A' lors de leur vissage dans la douille (4) par guidage de leur dite section cylindrique non filetée dans la section médiane S3 de la douille (4).

3. Dispositif selon l'une des revendications 1 ou 2, **caractérisé en ce que** l'ouverture (24) interne de sertissage d'un dit palier (P) de la vis de palier (2) est formée d'un alésage débouchant de part en part aux extrémités longitudinales de ladite vis de palier (2).

4. Dispositif selon l'une des revendications 1 à 3, **caractérisé en ce que** la vis de verrouillage (3) comporte un alésage interne (33) débouchant de part en part aux extrémités longitudinales de ladite vis de verrouillage (3), ledit alésage interne (33) présentant un diamètre interne d2 inférieur à d1.

5. Dispositif selon la revendication 4, **caractérisé en ce qu'**il comporte un contre-pivot (5) adapté pour être chassé selon l'axe A-A' longitudinal de la douille (4) dans ledit alésage interne de la vis de verrouillage (3) après vissage de celle-ci dans la douille, ledit contre-pivot (5) présentant une longueur L4 telle que L2< L4 < L3.

6. Dispositif selon l'une des revendications 1 à 5, **caractérisé en ce que** ladite douille (4) est apte à être chassée dans un orifice formé à cet effet dans un pont ou une platine.

7. Dispositif selon l'une des revendications 1 à 5, **caractérisé en ce que** ladite douille (4) est usinée dans un pont ou une platine.

8. Dispositif selon l'une des revendications 1 à 7, **caractérisé en ce que** lesdites vis de palier (2) et de verrouillage (3) comportent au niveau d'au moins une de leurs extrémités longitudinales des moyens d'accouplement (27, 37) à un outil de vissage, notamment une ou plusieurs encoches.

9. Procédé de fixation et de réglage d'un palier (P) dans un orifice prévu à cet effet dans un pont ou une platine de pièce d'horlogerie à l'aide d'un dispositif (1) selon l'une des revendications précédentes, comportant les étapes suivantes :

- Chassage ou usinage de la douille (4) dans un orifice formé dans ledit pont ou platine,
- Chassage d'un dit palier (P) à fleur dans l'ouverture interne (24) de maintien de la vis de palier (2),
- Mise en place de la vis de palier (2) dans la douille (4) par vissage dans un sens dans la première section taraudée (S1) de la douille (4),
- Mise en place de la vis de verrouillage (3) par vissage dans la seconde section taraudée (S2) dans un sens opposé au sens de vissage de la vis de palier (2) et alignement à la vis de palier (2) selon l'axe A-A' de la douille jusqu'à butée de la vis de verrouillage (3) contre la vis de palier (2).

10. Procédé selon revendication 9, **caractérisé en ce qu'**il comporte les étapes supplémentaires de :

- Chassage d'un contre pivot (5) dans un alésage central (33) de la vis de verrouillage (3) coaxialement à l'axe A-A' de la douille (4), et
- réglage du partagement entre une extrémité du contre-pivot (5) et une surface du palier (P) chassé dans la vis de palier (2) par ajustement de la distance de chasse du contre-pivot (5) au palier.

**Patentansprüche**

1. Eine Vorrichtung (1) zur Befestigung und Regulierung eines Lagers (P) in einem Loch, das zu diesem Zweck in einer Brücke oder einer Platine einer Uhr vorgesehen ist, umfassend:

- eine erste Schraube (2), sogenannte Lagerschraube, die eine Halteöffnung (24) eines besagten Lagers (P) mit einem Durchmesser d1 definiert, wobei die besagte erste Schraube (2) ein Aussengewinde (F1) mit einem Aussendurchmesser df1 von mehr als d1 und eine senkrecht zu den besagten Durchmessern d1, df1 gemessene Länge L1 umfasst;
- eine zweite Schraube (3), sogenannte Verriegelungsschraube, die eine Innenbohrung (33) mit einem Durchmesser d2 von weniger oder gleich d1 definiert, wobei die besagte zweite Schraube (3) ein Aussengewinde (F2) mit einem Aussendurchmesser df2 von mehr als die Durchmesser d2, d1, df1 und eine senkrecht zu den besagten Durchmessern d2, df2 gemessene Länge L2 umfasst; und
- eine Fassung (4), die eine röhrenförmige Lagerung (41) definiert, die sich entlang einer Längsachse (A-A') erstreckt, wobei die besagte röhrenförmige Lagerung (41) einen ersten mit Gewinde versehenen Abschnitt (S1) umfasst, der ausgelegt ist, um dort die erste Schraube (2) einzuschrauben, und einen zweiten mit Gewinde versehenen Abschnitt (S2), der ausgelegt ist, um dort die zweite Schraube (3) einzuschrauben, wobei die besagten mit Gewinde versehenen Abschnitte durch einen Mittelabschnitt (S3) zur linearen Führung der besagten Schrauben (2, 3) verbunden sind;
- wobei die Aussengewinde (F1, F2) der ersten und zweiten Schraube (2, 3) und die korrespondierenden Abschnitte (S1, S2) der Fassung (4) entsprechende Schraubsteigungen in entgegengesetzter Richtung aufweisen.

2. Vorrichtung nach Anspruch 1, **dadurch gekennzeichnet, dass** jede Schraube (2, 3) einen zylindrischen Abschnitt (26, 36) ohne Gewinde und mit Aussendurchmesser dl1, dl2 umfasst, dergestalt, dass dfl< dl1≤dl2<df2, und dadurch, dass die Fassung (4) einen nicht mit Gewinde versehenen Mittelabschnitt (S3) mit einem Innendurchmesser gleich den besagten Durchmessern dl1, dl2 umfasst, wobei die besagten zylindrischen Abschnitte der Schrauben und Mittelabschnitt (S3) der Fassung dergestalt sind, dass die besagten Schrauben bei Ihrem Einschrauben in die Fassung (4) durch Führung ihres besagten gewindelosen zylindrischen Abschnitts im Mittelabschnitt S3 der Fassung (4) koaxial zur Achse A-A' ausgerichtet sind.

3. Vorrichtung nach einem der Ansprüche 1 oder 2, **dadurch gekennzeichnet, dass** die innere Einsetzöffnung (24) eines besagten Lagers (P) der Lagerschraube (2) durch eine Bohrung gebildet ist, die von einer Seite zur anderen durch die Längsenden der besagten Lagerschraube (2) hindurchgeht.

4. Vorrichtung nach einem Ansprüche 1 bis 3, **dadurch gekennzeichnet, dass** die Verriegelungsschraube (3) eine Innenbohrung (33) umfasst, die von einer Seite zur anderen durch die Längsenden der besagten Verriegelungsschraube (3) hindurchgeht, wobei die besagte Innenbohrung (33) einen Innendurchmesser d2 von weniger als d1 aufweist.

5. Vorrichtung nach Anspruch 4, **dadurch gekennzeichnet, dass** sie einen Deckstein (5) umfasst, der ausgelegt ist, um entlang der Längsachse A-A' der Fassung (4) in die besagte Innenbohrung der Verriegelungsschraube (3) eingepresst zu werden, nachdem diese in die Fassung eingeschraubt wurde, wobei der besagte Deckstein (5) eine Länge L4 wie L2< L4 < L3 aufweist.

6. Vorrichtung nach einem der Ansprüche 1 bis 5, **dadurch gekennzeichnet, dass** die besagte Fassung (4) geeignet ist, um in ein Loch eingepresst zu werden, das zu diesem Zweck in einer Brücke oder einer Platine ausgebildet ist.

7. Vorrichtung nach einem der Ansprüche 1 bis 5, **dadurch gekennzeichnet, dass** die besagte Fassung (4) in einer Brücke oder einer Platine eingearbeitet ist.

8. Vorrichtung nach einem der Ansprüche 1 bis 7, **dadurch gekennzeichnet, dass** die besagten Lagerschraube (2) und Verriegelungsschraube (3) an mindestens einem ihrer Längsenden Kupplungsmittel (27, 37) für ein Schraubwerkzeug umfassen, insbesondere ein oder mehrere Nuten.

9. Verfahren zur Befestigung und Regulierung eines Lagers (P) in einem Loch, das zu diesem Zweck in einer Brücke oder einer Platine einer Uhr vorgesehen ist, mit Hilfe einer Vorrichtung (1) nach einem der vorstehenden Ansprüche, umfassend die folgenden Schritte:

   - Einpressen oder Einarbeiten der Fassung (4) in ein Loch, das in der besagten Brücke oder Platine ausgebildet ist,
   - Einpressen eines besagten Lagers (P) bündig in die innere Halteöffnung (24) der Lagerschraube (2),
   - Einsetzen der Lagerschraube (2) in die Fassung (4) durch Einschrauben in eine Richtung in den ersten mit Gewinde versehenen Abschnitt (S1) der Fassung (4),
   - Einsetzen der Verriegelungsschraube (3) durch Einschrauben in den zweiten mit Gewinde versehenen Abschnitt (S2) in einer entgegengesetzten Richtung zur Schraubrichtung der Lagerschraube (2) und Ausrichten an der Lagerschraube (2) entlang der Achse A-A' der Fassung bis zum Anschlag der Verriegelungsschraube (3) gegen die Lagerschraube (2).

10. Verfahren nach Anspruch 9, **dadurch gekennzeichnet, dass** es die zusätzlichen Schritte umfasst:

   - Einpressen eines Decksteins (5) in eine Mittelbohrung (33) der Verriegelungsschraube (3) koaxial zur Achse A-A' der Fassung (4), und
   - Regulierung der Einteilung zwischen einem Ende des Decksteins (5) und einer Oberfläche des Lagers (P), das in die Lagerschraube (2) eingepresst wurde, durch Anpassung des Einpressabstands des Decksteins (5) zum Lager.

## Claims

1. Device (1) for the attachment and the adjustment of a bearing (P) in an orifice provided for that purpose in a bridge or a plate of a timepiece, comprising:

   - A first screw (2), said bearing screw, defining a support opening (24) of such a bearing (P) having a diameter d1, said first screw (2) comprising an external thread (F1) having an external diameter df1 larger than d1 and a length L1, measured perpendicularly to said diameters d1, df1;
   - A second screw (3), said locking screw, defining an internal bore (33) of diameter d2 smaller or equal to d1, said second screw (3) comprising an external thread (F2) having an external diameter df2 larger than diameters d2, d1, df1 and a length L2, measured perpendicularly to said diameters d2, df2; and
   - A socket (4) defining a tubular housing (41) extending following a longitudinal axis (A-A'), said tubular housing (41) comprising a first tapped section (S1), adapted to screw the first screw (2), and a second tapped section (S2), adapted to screw the second screw (3), said tapped sections being joined by a medium section (S3) of linear guiding of said screws (2, 3);
   - The external threads (F1, F2) of the first and second screws (2, 3) and the corresponding sections (S1, S2) of the socket (4) have respective screwing pitches in opposite directions.

2. Device according to claim 1, **characterised in that** each screw (2, 3) comprises a cylindrical section (26, 36) devoid of thread and having an external diameter dl1, dl2 such that $df1 < dl1 \leq dl2 < df2$ and **in that** the socket (4) comprises a non-tapped medium section (S3) having an internal diameter equal to said diameters dl1, dl2, said cylindrical sections of the screws and medium section (S3) of the socket being such that said screws are aligned coaxially with the A-A' axis during their screwing in the socket (4) by guiding their non-threaded cylindrical section in the medium section (S3) of the socket (4).

3. Device according to one of claims 1 or 2, **characterised in that** the internal crimping opening (24) of such a bearing (P) of the bearing screw (2) comprises a through bore opening at the longitudinal ends of said bearing screw (2).

4. Device according to one of claims 1 to 3, **characterised in that** the locking screw (3) comprises an internal through bore (33) opening at the longitudinal ends of said locking screw (3), said internal bore (33) having an internal diameter d2 smaller than d1.

5. Device according to claim 4, **characterised in that** it comprises an endstone (5) adapted to be driven according to the longitudinal A-A' axis of the socket (4) in said internal bore of the locking screw (3) after screwing of the latter in the socket, said endstone (5) having a length L4 such that $L2 < L4 < L3$.

6. Device according to one of claims 1 to 5, **characterised in that** said socket (4) is able to be driven in an orifice shaped for that purpose in a bridge or a plate.

7. Device according to one of claims 1 to 5, **characterised in that** said socket (4) is machined in a bridge or a plate.

8. Device according to one of claims 1 to 7, **characterised in that** said bearing screw (2) and locking screw (3) comprise at the level of at least one of their longitudinal ends coupling means (27, 37) to a screwing tool, in particular one or more notches.

9. Method for the attachment and the adjustment of a bearing (P) in an orifice provided for that purpose in a bridge or a plate of a timepiece thanks to a device (1) according to one of the previous claims, comprising the following steps:

   - Driving or machining of the socket (4) in an orifice formed in said bridge or plate,
   - Driving of such a bearing (P) flush in the internal support opening (24) of the bearing screw (2),
   - Introduction of the bearing screw (2) in the socket (4) by screwing in a direction in the first tapped section (S1) of the socket (4),
   - Introduction of the locking screw (3) by screwing in the second tapped section (S2) in an opposite direction to the screwing direction of the bearing screw (2) and alignment with the bearing screw (2) according to the A-A' axis of the socket up to the abutment of the locking screw (3) against the bearing screw (2).

10. Method according to claim 9, **characterised in that** it comprises the following additional steps:

    - Driving of an endstone (5) in a central bore (33) of the locking screw (3) coaxially with the A-A' axis of the socket (4), and
    - Adjustment of the division between an end of the endstone (5) and a surface of the bearing (P) driven in the bearing screw (2) by adjusting the drive distance of the endstone (5) with the bearing.

**Fig.1**

**Fig.2**

**Fig.3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CH 99986 A